# EUROPÄISCHE PATENTSCHRIFT

(11) **EP 2 594 915 B1**
(45) Veröffentlichungstag und Bekanntmachung des Hinweises auf die Patenterteilung: **05.12.2018**
(21) Anmeldenummer: 12191978.1
(22) Anmeldetag: 09.11.2012
(51) Int. Cl.: G01L 3/10, G01D 5/14, G01L 5/22, G01P 3/487, G01D 11/30

(54) **Verfahren zum Verbinden eines Sensorteils mit einem Wellenteil eines Kraftfahrzeugs und Anordnung mit einem Wellenteil und einem Sensorteil**
Method for connecting a sensor part with a shaft section of a motor vehicle and assembly with a shaft section and a sensor part
Procédé de liaison d'une pièce de capteur avec une pièce d'arbre d'un véhicule automobile et agencement comportant une pièce d'arbre et une pièce de capteur

(30) Priorität: 15.11.2011 DE 102011118642
(43) Veröffentlichungstag der Anmeldung: 22.05.2013
(73) Patentinhaber: Valeo Schalter und Sensoren GmbH, 74321 Bietigheim-Bissingen (DE)
(72) Erfinder: Schwaderer, Jürgen, 74321 Bietigheim-Bissingen (DE); Fröhlich, Ekkehart, 74226 Nordheim (DE)

(56) Entgegenhaltungen:
- EP-A2- 2 034 276
- WO-A2-2010/031554
- DE-A1- 19 905 274
- DE-A1-102009 045 435

## Beschreibung

Die Erfindung betrifft ein Verfahren zum Verbinden eines Sensorteils einer Sensoranordnung mit einem Wellenteil eines Kraftfahrzeugs. Bei dem Wellenteil handelt es sich insbesondere um ein Wellenteil einer Lenkwelle des Kraftfahrzeugs. Mittels der Sensoranordnung wird eine Größe gemessen, welche einen Rotationszustand des Wellenteils charakterisiert, nämlich insbesondere einen Drehwinkel und/oder ein Drehmoment. Die Erfindung betrifft außerdem eine Anordnung umfassend ein Wellenteil eines Kraftfahrzeugs, wie auch ein mit dem Wellenteil verbundenes Sensorteil einer Sensoranordnung des Kraftfahrzeugs.

Vorliegend richtet sich das Interesse insbesondere auf eine Sensoranordnung, mittels welcher der Lenkwinkel und das Drehmoment einer Lenkwelle eines Kraftfahrzeugs gemessen werden kann. Solche Sensoranordnungen sind bereits Stand der Technik und werden in der Regel bei elektrischen Lenksystemen eingesetzt. So beschreibt beispielsweise die Druckschrift DE 102 40 049 A1 eine derartige Sensoranordnung, welche zur Erfassung des an einer Lenkwelle eines Kraftfahrzeugs anstehenden Drehmoments ausgebildet ist. Die Sensoranordnung ist dabei an zwei sich in axialer Richtung gegenüberliegenden Teilwellen der Lenkwelle angebracht. Auf der ersten Teilwelle ist eine drehfest angebrachte Hülse mit Dauermagneten vorhanden, während auf der anderen Teilwelle ein Magnetfeldsensor angebracht ist, welcher dem Dauermagneten an der ersten Teilwelle über einen Zwischenraum gegenüberliegt.

Eine derartige Sensoranordnung besteht üblicherweise aus zwei Einheiten bzw. Sensorteilen, nämlich zumindest einem Dauermagneten - insbesondere einem Ringmagneten oder einem segmentierten Magneten oder aber in Form eines Kreissegments ausgeführten Magneten - einerseits sowie einem Magnetsensor andererseits, welcher zum Erfassen des Magnetfelds des Dauermagneten dient. Während der Dauermagnet an einem ersten Wellenteil der Lenkung angebracht ist, ist der Magnetsensor in der Regel an einem zweiten Wellenteil angeordnet, welches über einen Torsionsstab mit dem ersten Wellenteil verbunden ist. Die Sensoranordnung erfasst also die relative Bewegung des ersten Wellenteils bezüglich des zweiten Wellenteils.

Bevor die Sensoranordnung im Kraftfahrzeug in Betrieb genommen werden kann, müssen die beiden genannten Sensorteile - also der Dauermagnet einerseits und der Magnetsensor andererseits - mit den jeweiligen Wellenteilen drehfest verbunden werden. Zu diesem Zwecke sind im Stand der Technik eine Vielzahl von Lösungen bekannt: Aufpressen, Warmeinbetten, Verstemmen, Metallschweißen sowie Verclipsen und dergleichen. All diese Lösungen weisen jedoch diverse Nachteile auf. So muss beispielsweise beim Aufpressen an dem Sensorteil eine zusätzliche, teure Stahlhülse eingesetzt werden, was insbesondere mit Nachteilen hinsichtlich der Kosten verbunden ist. Beim Warmeinbetten wiederum ist die Prozessführung besonders aufwändig, und es müssen Sonderverpackungen für die Sensorteile bereitgestellt werden, die ebenfalls besonders teuer sind. Beim Metallverstemmen sowie Metallschweißen muss genügend Platz für den Zugang mit dem Verstemmwerkzeug vorhanden sein, und auch am Sensorteil selbst muss eine zusätzliche, präzise tiefgezogene Stahlblechhülse mit eingespritzt sein. Beim Verclipsen schließlich sind die von der Verbindungstechnik ertragbaren Belastungen begrenzt, und es müssen zusätzliche Maßnahmen getroffen werden, die einen axial, radial und rotatorisch sicheren Sitz des Sensorteils am Wellenteil gewährleisten. Dies schränkt jedoch den Freiheitsgrad beim rotatorischen Ausrichten des Sensorteils am Wellenteil erheblich ein.

Aus der DE 10 2007 050 258 A1 ist ein Ringmagnet aus kunststoffgebundenen Magnetteilchen bekannt, der auf einem Träger angeordnet ist und eine solche Geometrie aufweist, die mit Ausnahme einer äußeren Wirkungsfläche in eine formschlüssig anliegende Umhüllung eingebettet ist. Diese Umhüllung kann kraftschlüssig durch Biegen oder Nieten um den Ringmagneten auch bereits nach der Montage des Ringmagneten geformt werden. Alternativ kann diese Umhüllung auch formschlüssig durch ein Schweißverfahren um den Ringmagneten geformt werden. Der Ringmagnet ist mittels einer Hülse an dem zugeordneten Wellenteil drehfest gehalten.

Zur sicheren Befestigung eines Ringmagneten an einem Wellenteil wird in der EP 0 980 081 B1 vorgeschlagen, ein laschenförmiges Teil einzusetzen, welches sich in den Ringmagneten hineinerstreckt und Schrumpfspannungen des Ringmagneten durch Verbiegen aufnimmt.

Eine genannten Sensoranordnung ist außerdem aus der Druckschrift DE 10 2005 038 516 A1 bekannt. Hier wird ein ferromagnetisches Element eingesetzt, welches benachbart zu dem Ringmagneten angeordnet ist. Weiterer Stand der Technik ist aus WO 2010/031554 A2 und DE 2011 101 482 A1 bekannt.

Es ist Aufgabe der Erfindung, einen Weg aufzuzeigen, wie ein Sensorteil einer Sensoranordnung - etwa ein Dauermagnet oder aber ein Magnetsensor - mit einem Wellenteil besonders zuverlässig und ohne viel Aufwand verbunden werden kann.

Diese Aufgabe wird erfindungsgemäß durch ein Verfahren sowie durch eine Anordnung mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird ein Sensorteil einer Sensoranordnung mit einem Wellenteil eines Kraftfahrzeugs - insbesondere mit einem Wellenteil einer Lenkwelle des Kraftfahrzeugs - verbunden. Mittels der Sensoranordnung wird eine einen Rotationszustand des Wellenteils charakterisierende Größe gemessen. Es werden jeweilige Kunststoffelemente bereitgestellt, nämlich an dem Wellenteil einerseits sowie an dem Sensorteil andererseits. Die beiden Kunststoffelemente werden dann miteinander stoffschlüssig verbunden, sodass das Sensorteil und das Wellenteil miteinander verbunden werden.

Die Erfindung geht also den Weg, sowohl an dem Wellenteil als auch an dem Sensorteil jeweils ein Kunststoffelement anzubringen und die beiden Kunststoffelemente stoffschlüssig miteinander zu verbinden. Gegenüber dem Stand der Technik ergeben sich somit diverse Vorteile: Durch die vorgeschlagene Lösung wird die Montagetechnik bzw. die Verbindung des Sensorteils mit dem Wellenteil wesentlich vereinfacht, was auch einen Kostenvorteil zur Folge hat. Die erforderliche Prozesstechnik für das stoffschlüssige Verbinden ist deutlich sicherer zu beherrschen, und die Qualität der Verbindung in der Serienfertigung steigt deutlich. Die erfindungsgemäße Vorgehensweise bietet auch den Vorteil einer rotatorisch flexiblen Positionierung des Sensorteils, ohne dass diese Positionierung durch mechanische Zwangsstrukturen begrenzt wird. Mit dem erfindungsgemäßen Verfahren kann eine robuste, zuverlässige Verbindung zwischen dem Sensorteil einerseits und dem Wellenteil andererseits hergestellt werden, die auch rotatorisch, axial sowie radial spielfrei ist. Weil mit dem erfindungsgemäßen Verfahren - etwa beim Laserschweißen - die Verbindung zwischen dem Sensorteil und dem Wellenteil auch ohne eine mechanische Kontaktierung hergestellt werden kann, ist für die Verbindung der beiden Bauteile auch ein deutlich kleinerer Zugangsraum für die Prozessführung bzw. für das Werkzeug erforderlich als dies beispielsweise beim Metallschweißen der Fall ist. Wird als Sensorteil beispielsweise ein Ringmagnet mit dem Wellenteil verbunden, so könnte - anders als im Stand der Technik - auf die teure und aufwändige Tiefziehhülse verzichtet werden. Im Stand der Technik werden nämlich die Ringmagneten in der Regel mit den so genannten Tiefziehhülsen mittels einer zusätzlichen Umspritzung verbunden. Bei dem erfindungsgemäßen Verfahren könnte auf eine solche Tiefziehhülse verzichtet werden, und der Ringmagnet kann so umspritzt werden, dass der Ringmagnet einerseits mechanisch gehalten werden kann und andererseits auch das für die Verbindung zum Wellenteil erforderliche Kunststoffelement angespritzt wird. Die Verbindung eines derartigen Ringmagneten mit dem Wellenteil wird somit im Vergleich zum Stand der Technik deutlich vereinfacht. Ein weiterer Vorteil der Erfindung besteht darin, dass auch die Anpassung der Sensorteile an unterschiedliche Wellentypen bzw. an Wellenteile unterschiedlicher Hersteller wesentlich vereinfacht wird, weil nur ein Kunststoffspritzwerkzeug benötigt wird, und es erübrigt sich der Einsatz von aufwändigen und teuren Stanz- und Tiefziehwerkzeugen.

Es erweist sich als besonders vorteilhaft, wenn die Kunststoffelemente schweißbare Elemente sind und das stoffschlüssige Verbinden durch Verschweißen - insbesondere Laserschweißen und/oder Ultraschallschweißen - erfolgt. Gerade dann ist die Verbindung zwischen dem Sensorteil einerseits und dem Wellenteil andererseits besonders zuverlässig und robust, und der tatsächliche Verbindungsvorgang kann auch in räumlich eingeengten Verhältnissen durchgeführt werden. Ein großer Vorteil dieser beiden Schweißverfahren ist auch der - gegenüber anderen Schweißverfahren sowie anderen Verbindungstechniken - geringere Energieeintrag in die beiden Bauteile, was wiederum einen geringeren thermischen Verzug zur Folge hat. Außerdem sind die Prozesstechnologien Laserschweißen und Ultraschallschweißen industriell verfügbar, sodass mit diesen beiden Verfahren die beiderseitigen Kunststoffelemente ohne viel Aufwand fest miteinander verbunden werden können. Dies geschieht insbesondere, nachdem die beiden Komponenten - das Sensorteil einerseits und das Wellenteil andererseits - richtig rotatorisch und axial relativ zueinander positioniert wurden. Diese rotatorische Ausrichtung der beiden Komponenten relativ zueinander wird durch die beiden genannten Schweißverfahren auch nicht limitiert, was einen weiteren Vorteil dieser Ausführungsform darstellt. Ein noch weiterer Vorteil besteht darin, dass das Werkzeug zum Schweißen auch in einer größeren Entfernung von den beiden Bauteilen positioniert werden kann. Nicht zuletzt sind mit den genannten Schweißverfahren auch verschiedenste Nahtgeometrien möglich; es können beispielsweise Überlappnähte und/oder Stumpfnähte und/oder Kehlnähte erzeugt werden.

Ergänzend oder alternativ kann auch vorgesehen sein, dass das stoffschlüssige Verbinden durch Heißverstemmen erfolgt.

Bevorzugt sind die beiden Kunststoffelemente Thermoplaste (auch unter der Bezeichnung "Plastomere" bekannt). Somit lassen sich die Kunststoffelemente in einem vordefinierten Temperaturbereich verformen, wobei dieser Vorgang reversibel ist. Somit wird ermöglicht, dass die beiden Kunststoffelemente stoffschlüssig miteinander verbunden werden können, und zwar beispielsweise durch Laserschweißen und/oder Ultraschallschweißen.

Wie bereits ausgeführt, kann unter dem Begriff "Sensorteil" ein Dauermagnet - insbesondere ein Ringmagnet - und/oder ein Magnetsensor zum Erfassen eines Magnetfelds verstanden werden. Dies bedeutet, dass mit einem genannten Wellenteil ein Dauermagnet als Sensorteil verbunden wird. Ergänzend oder alternativ kann auf die genannte Art und Weise auch ein Magnetsensor mit einem genannten Wellenteil verbunden werden. Vorzugsweise wird der Dauermagnet mit einem ersten Wellenteil auf die erfindungsgemäße Art und Weise verbunden, während der Magnetsensor mit einem zweiten Wellenteil verbunden wird. Die beiden Wellenteile können beispielsweise über einen Torsionsstab miteinander verbunden werden. Also können die beiden Wellenteile Bestandteile einer Fahrzeuglenkung sein, insbesondere einer elektrischen Lenkung.

Bevorzugt ist zumindest eines der Kunststoffelemente ringförmig ausgebildet. Es erweist sich als besonders vorteilhaft, wenn beide Kunststoffelemente ringförmig ausgebildet sind. Dann ist die Verbindung zwischen den beiden Komponenten besonders robust; denn die beiden Kunststoffelemente können umlaufend oder aber punktuell in vorbestimmten Abständen in Umfangsrichtung miteinander verschweißt werden.

Das Bereitstellen des Kunststoffelements an dem Wellenteil kann beispielsweise durch Spritzgießen erfolgen. Dies bedeutet, dass das Kunststoffelement an dem Wellenteil dadurch angebracht wird, dass das Wellenteil mit Kunststoff umspritzt wird. Hierdurch wird eine zuverlässige und spielfreie sowie schnelle und einfache Anbringung des Kunststoffelements an dem Wellenteil ermöglicht.

Alternativ kann jedoch auch vorgesehen sein, dass das Wellenteil und das zugehörige Kunststoffelement durch Pressfügen miteinander verbunden werden. Bei dieser Ausführungsform erfolgt die Bereitstellung des Kunststoffelements also durch Einpressen eines Kunststoffformlinges auf das Wellenteil, wodurch ebenfalls eine betriebssichere und rutschfeste Verbindung zwischen dem Wellenteil und dem Kunststoffelement gewährleistet ist. Der Kunststoffformling kann beispielsweise auch in eine Bohrung oder eine Vertiefung des Wellenteils eingepresst werden.

Es erweist sich dabei als besonders vorteilhaft, wenn das Wellenteil und das zugehörige Kunststoffelement formschlüssig miteinander verbunden werden. Insbesondere ist der Formschluss zumindest in Umfangsrichtung realisiert. Der Formschluss kann bei dem Wellenteil kostengünstig und ohne viel Aufwand beispielsweise durch einen polygonartigen Querschnitt in dem relevanten Wellenbereich oder aber über eine Rändelstruktur, eine Abflachung an dem Umfang des Wellenteils oder durch andere, geeignete Strukturen erreicht werden. Die formschlüssige Verbindung zwischen dem Kunststoffelement einerseits und dem Wellenteil andererseits sorgt für eine in Umfangsrichtung spielfreie Anordnung des Kunststoffelements relativ zum Wellenteil. Hierdurch wird wiederum verhindert, dass die Messergebnisse der Sensoranordnung aufgrund von Relativbewegungen des Kunststoffelements in Umfangsrichtung relativ zum Wellenteil negativ beeinflusst werden.

Erfindungsgemäß wird das Kunststoffelement des Wellenteils zumindest bereichsweise in einer an einem Umfang des Wellenteils ausgebildeten - insbesondere umlaufend ausgeführten - Vertiefung angeordnet. Also kann das Kunststoffelement in die Vertiefung des Wellenteils eingebettet werden. Dies hat den Vorteil, dass Relativbewegungen in axialer Richtung zwischen dem Kunststoffelement und dem Wellenteil und insbesondere ein Ablösen des Kunststoffelements vom Wellenteil verhindert werden. Die Erfindung sorgt also für eine sichere und rutschfeste Verbindung des Kunststoffelements mit dem Wellenteil in axialer Richtung.

Bevor die beiden Kunststoffelemente miteinander stoffschlüssig verbunden werden, kann das Sensorteil auf das Wellenteil zunächst aufgesteckt werden. Beim Aufstecken des Sensorteils kann durch das Kunststoffelement des Wellenteils ein axialer Anschlag für das Sensorteil gebildet werden. Hier übernimmt das Kunststoffelement des Wellenteils grundsätzlich zwei unterschiedliche Funktionen: einerseits die Funktion der stoffschlüssigen Verbindung und andererseits auch die Funktion des Anschlags für das Sensorteil beim Aufstecken selbigen Sensorteils auf das Wellenteil. Es erübrigt sich somit der Einsatz von weiteren Anschlagelementen.

Wie bereits erwähnt, kann das stoffschlüssige Verbinden, nämlich insbesondere das Schweißen, der jeweiligen Kunststoffelemente umlaufend durchgeführt werden, also fortlaufend bzw. kontinuierlich in Umfangsrichtung. Somit ist die Verbindung zwischen den beiden Komponenten besonders robust. Um jedoch den Aufwand auf ein Minimum zu reduzieren und dabei die große Zuverlässigkeit der Verbindung beizubehalten, kann vorgesehen sein, dass die beiden Kunststoffelemente punktuell in vorbestimmten Abständen in Umfangsrichtung stoffschlüssig verbunden werden. Dies bedeutet beispielsweise, dass die Schweißnaht nicht durchgehend umlaufend ausgebildet wird, sondern lediglich an vorbestimmten Punkten und in vorbestimmten Abständen an dem äußeren Umfang bzw. in Umfangsrichtung. Somit kann Zeit bei dem Verbindungsvorgang gespart werden, wie auch die Kosten, wobei die Verbindung zwischen den beiden Komponenten ebenfalls robust und zuverlässig ist.

Hinsichtlich der Schweißnähte sind grundsätzlich unterschiedlichste Ausführungsformen vorgesehen: Je nach Anordnung der beiden Kunststoffelemente relativ zueinander kann eine Stumpfnaht und/oder eine Überlappnaht und/oder eine Kehlnaht erzeugt werden.

Die Kunststoffelemente können mit ihren jeweiligen Stirnwänden bzw. Stirnseiten in Anlage miteinander gebracht werden, und das stoffschlüssige Verbinden kann in einem axialen Grenzbereich zwischen den beiden Stirnwänden durchgeführt werden. Bei dieser Ausführungsform erfolgt ein Verschweißen von jeweiligen, axial nebeneinander angeordneten bzw. aneinander angrenzenden Kanten der Kunststoffelemente. Werden die beiden Kunststoffelemente miteinander verschweißt, so hat man hier mit einer Stumpfnaht oder aber einer Kehlnaht zu tun, je nachdem, ob die beiden Kunststoffelemente umfangsseitig bündig miteinander abschließen oder nicht. Auf diese Art und Weise können die beiden Kunststoffelemente mit geringstem technischen Aufwand miteinander verbunden werden.

Es kann auch vorgesehen sein, dass die Kunststoffelemente derart - zumindest bereichsweise - relativ zueinander angeordnet werden, dass sie sich in einem Überlappungsbereich in radialer Richtung überlappen. Dann kann das stoffschlüssige Verbinden in dem Überlappungsbereich durchgeführt werden. Hier werden die Kunststoffelemente also in einem Überlappungsbereich miteinander verschweißt, in welchem die Kunststoffelemente radial übereinander liegen. Das - in radialer Richtung gesehen - äußere bzw. obere Kunststoffelement kann auch zumindest einen transparenten Bereich aufweisen, sodass das Laserschweißen durch diesen transparenten Bereich hindurch erfolgen kann. Die stoffschlüssige Verbindung in dem Überlappungsbereich, also an den jeweiligen, in axialer Richtung verlaufenden Kanten der Kunststoffelemente, hat den Vorteil, dass insgesamt eine größere Verbindungsfläche zwischen den beiden Kunststoffelementen für die stoffschlüssige Verbindung zur Verfügung steht, sodass die Verbindung noch flexibler im Hinblick auf die Position der Verbindungsstellen durchgeführt werden kann. Bei einer derartigen Anordnung, bei welcher die beiden Kunststoffelemente in radialer Richtung zumindest bereichsweise übereinander liegen, ist zusätzlich zu der stoffschlüssigen Verbindung auch eine reibschlüssige bzw. kraftschlüssige Verbindung vorhanden, welche die Verbindung zwischen den beiden Kunststoffelementen insgesamt unterstützt.

Demnach ist in einer Ausführungsform vorgesehen, dass eines der Kunststoffelemente zumindest bereichsweise transparent für einen Laserstrahl ausgebildet ist und der transparente Bereich mit dem anderen Kunststoffelement in Anlage gebracht wird, sodass das Laserschweißen durch den transparenten Bereich hindurch vorgenommen werden kann. Durch den Einsatz eines transparenten Bereichs wird ermöglicht, dass die beiden Kunststoffelemente in einem Überlappungsbereich mit einem Laserstrahl miteinander verschweißt werden können. Der Laserstrahl kann somit auch solche Verbindungsstellen zwischen den beiden Kunststoffelementen erreichen, welche beispielsweise für ein Werkzeug nicht erreichbar sind bzw. hinter dem oberen Kunststoffelement angeordnet sind.

In einer weiteren Ausführungsform ist vorgesehen, dass in einem ersten der Kunststoffelemente zumindest eine Aussparung ausgebildet wird. Dies kann eine radiale und/oder eine axiale Durchgangsöffnung sein. Dieses erste Kunststoffelement kann dann im Bereich dieser Aussparung mit dem zweiten Kunststoffelement in Anlage gebracht werden, und das stoffschlüssige Verbinden kann in einem die Aussparung begrenzenden Kantenbereich des ersten Kunststoffelements durchgeführt werden. Mit anderen Worten kann das erste Kunststoffelement derart in Anlage mit dem zweiten Kunststoffelement gebracht werden, dass das zweite Kunststoffelement durch die Aussparung hindurch zugänglich ist. In einem solchen Fall kann das Laserschweißen bzw. das Ultraschallschweißen derart erfolgen, dass die die Aussparung begrenzende Kante bzw. ein die Aussparung begrenzender Randbereich des ersten Kunststoffelements mit dem zweiten Kunststoffelement verschweißt wird. Wie ein transparenter Bereich hat auch die Aussparung den Vorteil, dass das zweite Kunststoffelement mit dem Laserstrahl bzw. mit dem Ultraschall erreicht und die Verbindung in einem Überlappungsbereich ermöglicht wird.

Vor dem stoffschlüssigen Verbinden der beiden Kunststoffelemente können das Sensorteil und das Wellenteil durch Pressfügen miteinander verbunden werden. Mit anderen Worten kann für den radial festen Sitz das Sensorteil auf das Wellenteil aufgepresst werden. Dieser Presssitz muss nicht unbedingt so ausgelegt sein, dass der Kraftschluss über Temperatur und Lebensdauer vorhanden ist; denn die tatsächliche Verbindung des Sensorteils mit dem Wellenteil wird durch die stoffschlüssige Verbindung der jeweiligen Kunststoffelemente erreicht. Die Reduzierung dieser Anforderung an den Presssitz stellt einen weiteren Vorteil der vorliegenden Erfindung dar.

Eine erfindungsgemäße Anordnung weist ein Wellenteil eines Kraftfahrzeugs, insbesondere ein Wellenteil einer Lenkwelle des Kraftfahrzeugs, sowie ein mit dem Wellenteil verbundenes Sensorteil einer Sensoranordnung auf, welche zum Erfassen einer einen Rotationszustand des Wellenteils charakterisierenden Größe ausgebildet ist. Das Wellenteil und das Sensorteil sind über jeweilige Kunststoffelemente stoffschlüssig miteinander verbunden, nämlich insbesondere durch Laserschweißen und/oder durch Ultraschallschweißen.

Die mit Bezug auf das erfindungsgemäße Verfahren vorgestellten bevorzugten Ausführungsformen und deren Vorteile gelten entsprechend für die erfindungsgemäße Anordnung.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1 bis 7: in schematischer Darstellung jeweils eine Seitenansicht (jeweils untere Hälfte der Zeichnung) sowie einen Längsschnitt (jeweils obere Hälfte) durch eine Anordnung gemäß unterschiedlichen Ausführungsformen der Erfindung;
- Fig. 8: in schematischer und perspektivischer Darstellung ein Wellenteil einer Anordnung gemäß einer Ausführungsform der Erfindung;
- Fig. 9: in schematischer und perspektivischer Darstellung einen Abschnitt eines Kunststoffelements, welches als umlaufender Ring ausgebildet ist;
- Fig. 10: in schematischer und perspektivischer Darstellung das Wellenteil gemäß Fig. 8 mit dem Kunststoffelement gemäß Fig. 9;
- Fig. 11 bis 13: in schematischer und perspektivischer Darstellung jeweils einen Ringmagneten, welcher an einem als zylinderförmiger Träger ausgebildeten Kunststoffelement angeordnet ist;
- Fig. 14: in schematischer und perspektivischer Darstellung einen Längsschnitt durch das Wellenteil gemäß Fig. 10 mit dem Ringmagneten gemäß Fig. 12; und
- Fig. 15: in schematischer Darstellung eine Seitenansicht (untere Hälfte der Zeichnung) sowie einen Längsschnitt (obere Hälfte) durch eine Anordnung gemäß einer weiteren Ausführungsform der Erfindung.

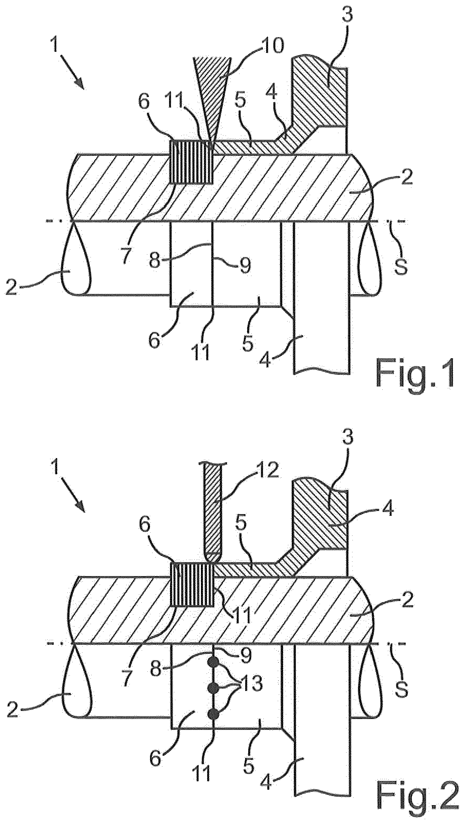

Die Fig. 1 bis 7 sind jeweils in zwei Hälften unterteilt, und zwar eine obere und eine untere Hälfte. Die Fig. 1 bis 7 zeigen jeweils eine Anordnung gemäß einer Ausführungsform der Erfindung, wobei in den oberen Hälften jeweils ein Längsschnitt durch die jeweilige Anordnung und in den unteren Hälften jeweils eine Seitenansicht der jeweiligen Anordnung dargestellt ist.

In Fig. 1 ist eine Anordnung 1 gemäß einer ersten Ausführungsform der Erfindung dargestellt. Diese Anordnung 1 beinhaltet ein Wellenteil 2, welches Bestandteil einer Lenkwelle eines Kraftfahrzeugs ist. Zur Messung des Drehmoments wird bei der Lenkung des Kraftfahrzeugs eine Sensoranordnung eingesetzt, die grundsätzlich aus zwei Sensorteilen besteht, nämlich aus einem Ringmagneten einerseits sowie einem Magnetsensor andererseits. Das eine Sensorteil wird an einem ersten Wellenteil und das andere Sensorteil an einem anderen Wellenteil angeordnet, wobei die Wellenteile über einen Torsionsstab miteinander verbunden sind.

Es geht vorliegend um die Verbindung der Sensorteile mit den jeweiligen Wellenteilen. Im Ausführungsbeispiel gemäß Fig. 1 wird ein Magnetsensor 3 mit dem Wellenteil 2 verbunden. In Fig. 1 ist dabei lediglich ein Abschnitt des Magnetsensors 3 dargestellt, und zwar der so genannte Halter 4. Der Halter 4 ist aus schweißbarem Kunststoff ausgebildet und stellt im Ausführungsbeispiel gemäß Fig. 1 ein Kunststoffelement im Sinne der vorliegenden Erfindung dar. Der Halter 4 weist einen zylinderförmigen Fortsatz 5 auf, welcher auf das Wellenteil 2 aufgesteckt werden kann.

An dem Wellenteil 2 ist auch ein wellenseitiges Kunststoffelement 6 bereitgestellt, welches hier in Form eines umlaufenden Rings ausgebildet und in einer Vertiefung 7 des Wellenteils 2 eingebettet ist. Die Vertiefung 7 ist an einem Umfang des Wellenteils 2 umlaufend ausgebildet. Die Geometrie der Vertiefung 7 und des inneren Umfangs des Kunststoffelements 6 kann so ausgewählt sein, dass eine formschlüssige Verbindung in Umfangsrichtung zwischen dem Kunststoffelement 6 einerseits und dem Wellenteil 2 andererseits bereitgestellt ist. So weist die Vertiefung 7 im Querschnitt insbesondere keine Ringform auf, sondern kann beispielsweise einen polygonartigen Querschnitt, eine Rändelstruktur oder aber eine andere, geeignete Struktur aufweisen, damit die formschlüssige Verbindung in Umfangsrichtung gegeben ist.

Das Wellenteil 2 ist um eine Drehachse S drehbar.

Das Kunststoffelement 6 wird insbesondere durch Spritzgießen angebracht. Dies bedeutet, dass das Wellenteil 2 mit dem aus Kunststoff ausgebildeten Kunststoffelement 6 umspritzt wird. Dabei ragt das Kunststoffelement 6 - wie aus Fig. 1 hervorgeht - ein wenig aus der Vertiefung 7 heraus und erhebt sich somit in radialer Richtung über den äußeren Umfang des Wellenteils 2.

Beim Aufstecken des Magnetsensors 3 auf das Wellenteil 2 bildet das Kunststoffelement 6 einen axialen Anschlag für den Halter 4 des Magnetsensors 3. Der Halter 4 und das Kunststoffelement 6 grenzen dann aneinander an, sodass jeweilige, axiale Stirnseiten bzw. Stirnwände 8, 9 miteinander in Anlage gebracht sind. Die in radialer Richtung gesehen äußeren Umfangsflächen des Kunststoffelements 6 und des Fortsatzes 5 können miteinander bündig abschließen.

Im Ausführungsbeispiel gemäß Fig. 1 ist also sowohl an dem Wellenteil 2 als auch an dem Magnetsensor 3 jeweils ein Kunststoffelement bereitgestellt, und zwar das Kunststoffelement 6 einerseits sowie der Fortsatz 5 bzw. der Halter 4 andererseits. Die beiden Kunststoffelemente 5, 6 grenzen unmittelbar aneinander an. Die Verbindung des Magnetsensors 3 mit dem Wellenteil 2 erfolgt durch Laserschweißen des Kunststoffelements 6 einerseits mit dem Fortsatz 5 andererseits. Die Verbindung erfolgt also mittels eines in Fig. 1 schematisch dargestellten Laserstrahls 10. Dabei wird eine umlaufende Stumpfnaht erzeugt bzw. das Laserschweißen erfolgt in einem Grenzbereich 11 zwischen den jeweiligen Stirnseiten bzw. Stirnwänden 8, 9. Anstatt die beiden Kunststoffelemente 6 und 5 umlaufend miteinander zu verschweißen, kann das Laserschweißen auch punktuell in vorbestimmten Abständen in Umfangsrichtung erfolgen.

In Fig. 2 ist eine Anordnung 1 gemäß einer weiteren Ausführungsform dargestellt. Diese Anordnung 1 gemäß Fig. 2 entspricht im Wesentlichen der gemäß Fig. 1, wobei der einzige Unterschied darin besteht, dass hier die beiden Kunststoffelemente 6, 5 durch Ultraschallschweißen mittels eines schematisch dargestellten Ultraschall-Schweißkopfes 12 verschweißt werden. Das Ultraschallschweißen erfolgt hier punktuell, wie dies in Fig. 2 anhand von Nahtpunkten 13 schematisch dargestellt ist. Das Ultraschallschweißen erfolgt in vorbestimmten Abständen in Umfangsrichtung, beispielsweise alle 5° oder alle 10° oder alle 15° oder alle 20°.

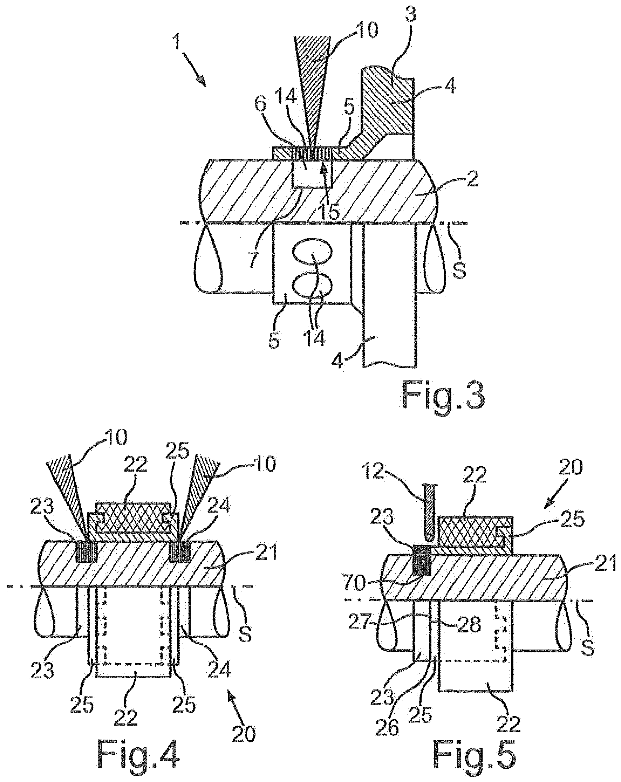

Eine Anordnung 1 gemäß einer weiteren Ausführungsform ist in Fig. 3 gezeigt. Auch hier ist das Kunststoffelement 6 in die Vertiefung 7 des Wellenteils 2 eingebettet. Der Unterschied besteht darin, dass das Kunststoffelement 6 mit dem Außenumfang des Wellenteils 2 bündig abschließt und der Fortsatz 5 des Magnetsensors 3 das Kunststoffelement 6 überlappt. In radialer Richtung gesehen ist der Fortsatz 5 also über dem Kunststoffelement 6 angeordnet. In dem Fortsatz 5 sind dabei transparente Bereiche 14 bereitgestellt, welche den Laserstrahl 10 durchlassen bzw. für diesen Laserstrahl 10 transparent sind. Wie in Fig. 3 dargestellt ist, können mehrere transparente Bereiche 14 in einem Abstand zueinander in Umfangsrichtung angeordnet sein. Alternativ kann jedoch auch vorgesehen sein, dass ein umlaufender transparenter Bereich 14 bereitgestellt ist. Das Laserschweißen erfolgt hier durch die transparenten Bereiche 14 hindurch. Der Laserstrahl 10 durchdringt nämlich die transparenten Bereiche 14 und erreicht das Kunststoffelement 6, das unterhalb des Fortsatzes 5 liegt. Die Schweißverbindung entsteht somit in einem Überlappungsbereich 15 zwischen dem Kunststoffelement 6 einerseits und dem Fortsatz 5 andererseits.

In Fig. 4 ist eine weitere Anordnung 20 gemäß einer Ausführungsform der Erfindung dargestellt. Die Anordnung 20 beinhaltet ein Wellenteil 21, welches mit einem anderen Sensorteil, nämlich mit einem Ringmagneten 22, verbunden wird. Auch hier erfolgt die Verbindung über jeweilige Kunststoffelemente, und zwar zwei an dem Wellenteil 21 angebrachte Kunststoffelemente 23, 24 einerseits sowie ein Kunststoffelement 25 andererseits, an welchem der Ringmagnet 22 angeordnet ist. Das Kunststoffelement 25 dient also als ein Träger für den Ringmagneten 22. Das zylinderförmige Kunststoffelement 25 ist im Längsschnitt im Wesentlichen U-förmig ausgebildet und weist gegenüberliegende Schenkel auf, zwischen welchen der Ringmagnet 22 bereichsweise eingebettet ist. Zwischen dem Kunststoffelement 25 und dem Ringmagneten 22 ist vorliegend also eine formschlüssige Verbindung bereitgestellt. Das Kunststoffelement 25 erstreckt sich in axialer Richtung zwischen etwa der axialen Mitte des Kunststoffelements 23 und der axialen Mitte des Kunststoffelements 24.

Die Kunststoffelemente 23, 24 entsprechen in ihrer jeweiligen Ausgestaltung grundsätzlich dem Kunststoffelement 6 gemäß Fig. 3. Sie schließen in radialer Richtung mit dem äußeren Umfang des Wellenteils 21 bündig ab, sodass das Kunststoffelement 25 des Ringmagneten 22 an seinen axialen Enden an dem jeweiligen äußeren Umfang der Kunststoffelemente 23, 24 anliegt. Zwischen den Kunststoffelementen 23, 24 liegt das Kunststoffelement 25 mit seinem inneren Umfang an dem äußeren Umfang des Wellenteils 21 an. Also erstreckt sich das Kunststoffelement 25 in axialer Richtung zwischen dem Kunststoffelement 23 einerseits und dem Kunststoffelement 24 andererseits. Das Kunststoffelement 25 mit dem daran angebrachten Ringmagneten 22 kann auf das Wellenteil 21 aufgesteckt bzw. aufgeschoben werden und dann mittig zwischen den beiden Kunststoffelementen 23, 24 ausgerichtet werden, nämlich in axialer Richtung. Nach der Positionierung des Kunststoffelements 25 mit dem dazugehörigen Ringmagneten 22 kann dieses Kunststoffelement 25 mit den beiden, wellenseitigen Kunststoffelementen 23, 24 mit Laserstrahlen 10 verschweißt werden. Das Laserschweißen erfolgt also an zwei gegenüberliegenden axialen Enden des Kunststoffelements 25, was für eine besondere Stabilität und Sicherheit sorgt.

Der Ringmagnet 22 kann mit dem Kunststoffelement 25 beispielsweise durch Spritzgießen verbunden werden.

Im Ausführungsbeispiel gemäß Fig. 4 sind das Wellenteil 21 sowie teilweise auch die Kunststoffelemente 23, 24 durch das Kunststoffelement 25 des Ringmagneten 22 ummantelt bzw. umgeben, und zwar umlaufend.

Im Beispiel gemäß Fig. 4 erfolgt das Laserschweißen nicht wie in Fig. 1 in radialer Richtung, sondern schräg unter einem Winkel größer 0° und kleiner 90° bezüglich der Drehachse S des Wellenteils 21. Es handelt sich dabei also um so genannte Kehlnähte, welche mittels der beiden Laserstrahlen 10 in den jeweiligen Eckbereichen zwischen den Kunststoffelementen 23 und 25 sowie auf der anderen Seite zwischen den Kunststoffelementen 24 und 25 erzeugt werden.

Ein weiteres Ausführungsbeispiel, wie ein Ringmagnet 22 über das zugehörige Kunststoffelement 25 an dem Wellenteil 21 befestigt werden kann, ist in Fig. 5 dargestellt. In diesem Beispiel ist an dem Wellenteil 21 lediglich ein einziges Kunststoffelement 23 bereitgestellt, mit welchem das Wellenteil 21 beispielsweise umspritzt wird. Dieses Kunststoffelement 23 erhebt sich in radialer Richtung über den äußeren Umfang des Wellenteils 21 und ragt somit in radialer Richtung aus der Vertiefung 70 heraus. Wie im Beispiel gemäß Fig. 1 ist auch hier somit durch das Kunststoffelement 23 ein axialer Anschlag für das Kunststoffelement 25 des Ringmagneten 22 gebildet, sodass das Kunststoffelement 25 in axialer Richtung bis hin zum Anschlag bzw. zum Kunststoffelement 23 auf das Wellenteil 21 aufgesteckt werden kann. Die jeweiligen äußeren Umfänge der Kunststoffelemente 23, 25 sind bündig angeordnet, sodass die beiden Kunststoffelemente 23, 25 im Grenzbereich 26 miteinander verschweißt werden können und hierbei eine Stumpfnaht erzeugt werden kann, nämlich wie im Beispiel gemäß Fig. 1.

Mit weiterem Bezug auf Fig. 5 werden die beiden Kunststoffelemente 23, 25 mittels eines Ultraschallsensor-Schweißkopfes 12 miteinander verschweißt. Dieses Ultraschallschweißen erfolgt beispielsweise umlaufend oder aber punktuell in vorbestimmten Abständen in Umfangsrichtung.

Also werden die Kunststoffelemente 23, 25 im axialen Grenzbereich 26 miteinander verschweißt. Dabei sind die Kunststoffelemente 23, 25 mit ihren jeweiligen Stirnwänden 27, 28 miteinander in Anlage gebracht. Somit ist sowohl ein Ultraschallschweißen als auch ein Laserschweißen möglich.

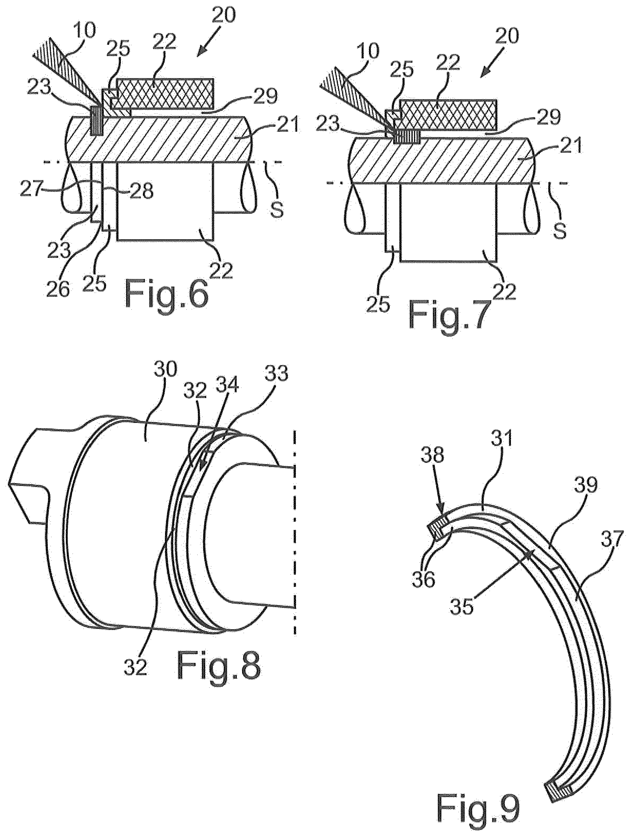

Ein weiteres Ausführungsbeispiel ist in Fig. 6 dargestellt. Auch hier bildet das wellenseitige Kunststoffelement 23 einen axialen Anschlag für das magnetseitige Kunststoffelement 25. Gegenüber den Anordnungen 20 gemäß den Fig. 4 und 5 ist das Kunststoffelement 25 im Beispiel gemäß Fig. 6 in axialer Richtung deutlich kürzer ausgebildet, sodass zwischen dem Ringmagneten 22 und dem Wellenteil 21 ein nicht überbrückter Luftspalt 29 ausgebildet ist. Der Ringmagnet 22 ist somit in radialer Richtung in einem Abstand zum Wellenteil 21 angeordnet. Lediglich an einem axialen Randbereich ist dieser Abstand durch das Kunststoffelement 25 überbrückt. Auch hier sind die beiden Kunststoffelemente 23, 25 mit ihren jeweiligen Stirnwänden 27, 28 miteinander in Anlage gebracht, wobei - anders als in Fig. 5 - das magnetseitige Kunststoffelement 25 einen insgesamt größeren äußeren Radius als das wellenseitige Kunststoffelement 23 aufweist. Somit ist die Erzeugung einer Kehlnaht im Eckbereich zwischen den beiden Kunststoffelementen 23, 25 mittels des Laserstrahls 10 möglich.

Im Ausführungsbeispiel gemäß Fig. 7 ist das wellenseitige Kunststoffelement 23 durch das magnetseitige Kunststoffelement 25 sowie durch den Ringmagneten 22 insgesamt verdeckt, sodass das Laserschweißen mittels des Laserstrahls 10 durch das Kunststoffelement 25 hindurch erfolgt. In diesem Beispiel ist das Kunststoffelement 25 zumindest bereichsweise transparent ausgebildet, sodass ein Überlappschweißen ermöglicht wird. Auch hier fällt der Laserstrahl 10 unter einem Winkel ein, welcher in einem Wertebereich von 0° bis 90°, insbesondere von 20° bis 60°, liegt.

In den Fig. 8 bis 10 ist dargestellt, wie an einem Wellenteil 30 ein Kunststoffelement 31 bereitgestellt werden kann. Wie in Fig. 8 dargestellt, weist das Wellenteil 30 eine umlaufende Vertiefung bzw. eine Nut 32 auf, in welcher dann das Kunststoffelement 31 angeordnet ist. In axialer Richtung ist die Vertiefung mittels eines radialen Flansches 33 begrenzt, welcher mit Ausnahme einer Abflachung 34 in Umfangsrichtung insgesamt ringförmig ausgebildet ist.

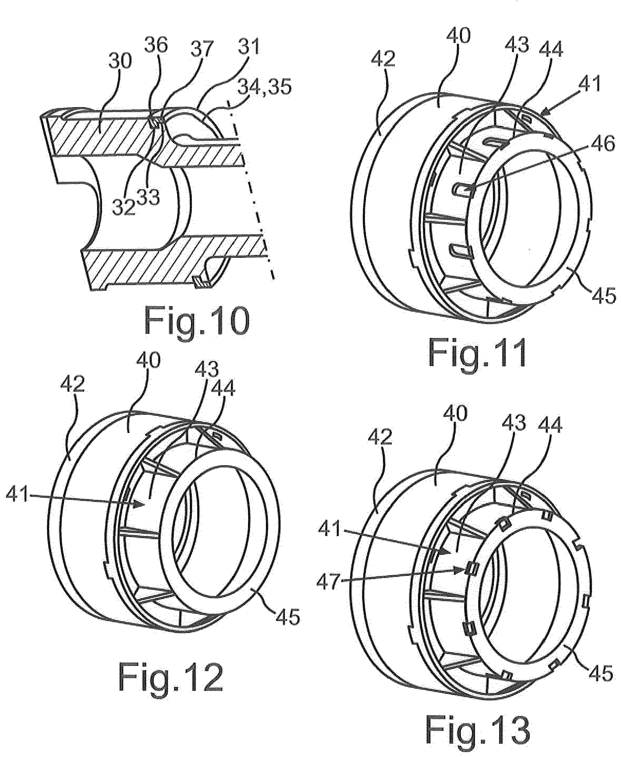

Das Wellenteil 30 kann mit dem Kunststoffelement 31 umspritzt werden. Dann weist das insgesamt ringförmige Kunststoffelement 31 - wie in Fig. 9 dargestellt - ebenfalls eine korrespondierende Abflachung 35 auf, die jedoch an dem inneren Umfang des Kunststoffelements 31 vorhanden ist. Hierdurch wird eine formschlüssige Verbindung zwischen dem Kunststoffelement 31 und dem Wellenteil 30 ermöglicht. Das Kunststoffelement 31 weist einen ringförmigen Basiskörper 36 auf, an welchen sich in axialer Richtung ein Flansch 37 unmittelbar anschließt. Während der Grundkörper 36 - wie in Fig. 10 dargestellt - in der Vertiefung 32 liegt, liegt der axiale Flansch 37 an dem Flansch 33 des Wellenteils 30 an. Das Kunststoffelement 31 weist außerdem einen äußeren Umfang 38, wie auch eine axiale Stirnwand 39 auf. Die stoffschlüssige Verbindung mit dem sensorseitigen Kunststoffelement kann über die Stirnwand 39 und/oder über den äußeren Umfang 38 erfolgen.

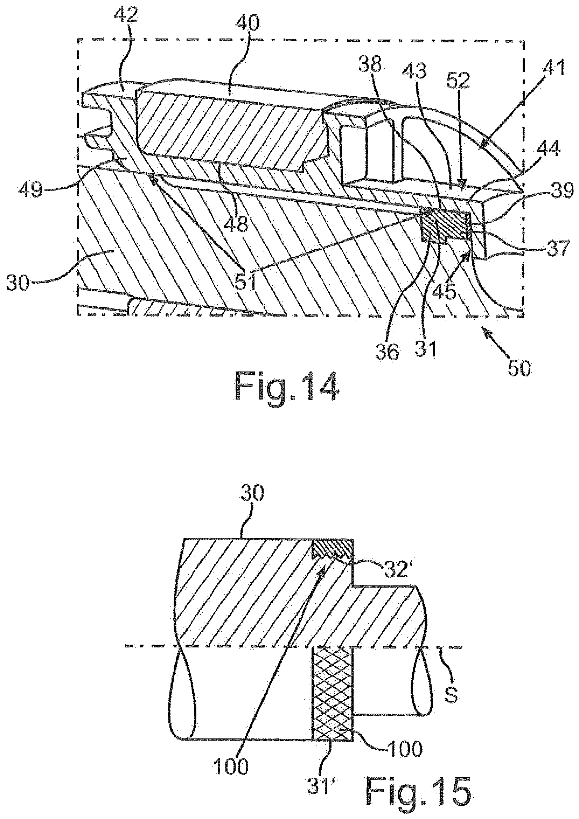

Wie in Fig. 15 dargestellt ist, kann alternativ zu der Abflachung 34 in der Vertiefung 32' des Wellenteils 30 und/oder auf dem Flansch 33 (in Fig. 15 nicht dargestellt) auch eine Rändelstruktur 100 angebracht sein. Wird die Rändelstruktur 100 als Kreuzrändel ausgebildet, kann gegebenenfalls auf die Vertiefung 32' verzichtet werden und dennoch ein Formschluss in radialer Richtung sowie in Umfangsrichtung, wie auch in axialer Richtung erreicht werden. Auch das Kunststoffelement 31' weißt an seinem inneren Umfang eine korrespondierende Rändelstruktur 100 auf.

In den Fig. 11 bis 13 sind unterschiedliche Beispiele für einen Ringmagneten 40 mit dem zugehörigen Kunststoffelement 41 dargestellt. Das Kunststoffelement 41 bildet insgesamt einen zylinderförmigen Träger, an dessen Außenumfang der Ringmagnet 40 anliegend angeordnet ist. Das Kunststoffelement 41 weist dabei einen Basiskörper 42 auf, welcher die Form eines Zylinders hat und an welchem der Ringmagnet 40 angeordnet ist. An den Basiskörper 42 schließt sich in axialer Richtung ein axialer Fortsatz 43 unmittelbar an, welcher gegenüber dem Basiskörper 42 einen geringeren Durchmesser besitzt. Auch der Fortsatz 43 ist zylinderförmig ausgeführt. An einem axialen Ende 44 des Fortsatzes 43 ist in radialer Richtung ein Flansch 45 ausgebildet, welcher in Richtung zum Zentrum des zylindrischen Kunststoffelements 41 weist, also in radialer Richtung nach innen hin. Dieser Flansch 45 bildet einen axialen Anschlag, wenn das Kunststoffelement 41 mit dem zugehörigen Ringmagneten 40 auf das Wellenteil 30 gemäß Fig. 10 aufgesteckt wird.

Die Unterschiede zwischen den Kunststoffelementen 41 gemäß den Fig. 11 bis 13 sind wie folgt: Das Kunststoffelement 41 gemäß Fig. 11 weist eine Vielzahl von Aussparungen 46 auf, welche an dem äußeren Umfang des Fortsatzes 43 äquidistant in Umfangsrichtung ausgebildet sind. Diese Aussparungen 46 sind hier Durchgangsöffnungen in dem Umfang des Fortsatzes 43. Demgegenüber sind solche Aussparungen 47 im Ausführungsbeispiel gemäß Fig. 13 an dem radialen Flansch 45 ausgebildet. Diese Aussparungen 47 sind ebenfalls Durchgangsöffnungen, die an dem Flansch 45 äquidistant in Umfangsrichtung angeordnet sind. Das Kunststoffelement 41 hingegen ist transparent für den Laserstrahl ausgeführt.

Wird das Kunststoffelement 41 (Fig. 11 bis 13) auf das Wellenteil 30 (Fig. 10) aufgesteckt, so erhält man eine Anordnung 50, wie sie in Fig. 14 dargestellt ist. Wie aus Fig. 14 hervorgeht, ist der Ringmagnet 40 in eine umlaufende, an dem Umfang des Kunststoffelements 41 ausgebildete Vertiefung 48 eingebettet. Wie weiterhin aus Fig. 14 hervorgeht, ist das Kunststoffelement 41 sowohl an dem axialen Ende 44 als auch an dem gegenüberliegenden axialen Ende 49 an korrespondierenden Abstützflächen 51 abgestützt. Eine der Abstützflächen 51 ist dabei durch den äußeren Umfang 38 des Kunststoffelements 31 gebildet. Wird - wie in Fig. 14 dargestellt - das transparente Kunststoffelement gemäß Fig. 12 verwendet, so erfolgt das Laserschweißen durch das Kunststoffelement 41 hindurch, nämlich in einem Überlappungsbereich 52. Dies kann an dem radialen Umfang des Kunststoffelements 41 und/oder durch den radialen Flansch 45 vorgenommen werden. Die Laserstrahlen können hier grundsätzlich in einem beliebigen Winkel von 0° bis 90° bezüglich der Drehachse S ausgerichtet werden.

Werden statt des transparenten Kunststoffelements 41 die nicht-transparenten Kunststoffelemente 41 gemäß den Fig. 11 oder 13 verwendet, so erfolgt das Schweißen durch die Aussparungen 46 bzw. 47 hindurch. Dabei wird der jeweilige, die Aussparung 46 bzw. 47 begrenzende Randbereich des Kunststoffelements 41 mit dem wellenseitigen Kunststoffelement 31 verschweißt.

## Patentansprüche

1. Verfahren zum Verbinden eines Sensorteils (3, 22, 40) einer Sensoranordnung mit einem Wellenteil (2, 21, 30) eines Kraftfahrzeugs, insbesondere einer Lenkwelle, wobei mittels der Sensoranordnung eine einen Rotationszustand des Wellenteils (2, 21, 30) charakterisierende Größe gemessen wird, mit den Schritten:
- Bereitstellen eines Kunststoffelements (5, 25, 41) an dem Wellenteil (2, 21, 30),
- Bereitstellen eines Kunststoffelements (6, 23, 24, 31) an dem Sensorteil (3, 22, 40) und
- stoffschlüssiges Verbinden der beiden Kunststoffelemente (5, 6, 23, 24, 25, 31, 41), so dass das Sensorteil (3, 22, 40) und das Wellenteil (2, 21, 30) miteinander verbunden werden,
**dadurch gekennzeichnet, dass**
das Kunststoffelement (6,23,24,31) des Wellenteils (2,21,30) zumindest bereichsweise in eine an einem Umfang des Wellenteils (2,21,30) ausgebildete Vertiefung (7,32) angeordnet wird.

2. Verfahren nach Anspruch 1,
**dadurch gekennzeichnet, dass**
die Kunststoffelemente (5, 6, 23, 24, 25, 31, 41) schweißbare Elemente sind und das stoffschlüssige Verbinden durch Verschweißen, insbesondere Laserschweißen und/oder Ultraschallschweißen, erfolgt.

3. Verfahren nach Anspruch 1 oder 2,
**dadurch gekennzeichnet, dass**
das stoffschlüssige Verbinden durch Heißverstemmen erfolgt.

4. Verfahren nach einem der vorhergehenden Ansprüche,
**dadurch gekennzeichnet, dass**
als Sensorteil (3, 22, 40) ein Dauermagnet, insbesondere ein Ringmagnet oder ein segmentierter Ringmagnet oder ein in Form eines Ringsegmentes ausgebildeter Magnet, mit einem genannten Wellenteil (2, 21, 30) verbunden wird.

5. Verfahren nach einem der vorhergehenden Ansprüche,
**dadurch gekennzeichnet, dass**
als Sensorteil (3, 22, 40) ein Magnetsensor zum Erfassen eines Magnetfeldes mit einem genannten Wellenteil (2, 21, 30) verbunden wird.

6. Verfahren nach einem der vorhergehenden Ansprüche,
**dadurch gekennzeichnet, dass**
zumindest eines der Kunststoffelemente (5, 6, 23, 24, 25, 31, 41) ringförmig ausgebildet wird.

7. Verfahren nach einem der vorhergehenden Ansprüche,
**dadurch gekennzeichnet, dass**
das Anbringen des Kunststoffelements (6, 23, 24, 31) an das Wellenteil (2, 21, 30) durch Spritzgießen erfolgt.

8. Verfahren nach einem der Ansprüche 1 bis 6,
**dadurch gekennzeichnet, dass**
das Wellenteil (2, 21, 30) und das zugehörige Kunststoffelement (6, 23, 24, 31) durch Pressfügen miteinander verbunden werden.

9. Verfahren nach einem der vorhergehenden Ansprüche,
**dadurch gekennzeichnet, dass**
das Wellenteil (2, 21, 30) und das zugehörige Kunststoffelement (6, 23, 24, 31) formschlüssig miteinander verbunden werden.

10. Verfahren nach einem der vorhergehenden Ansprüche, **dadurch gekennzeichnet, dass**
das Verbinden des Sensorteils (3, 22, 40) mit dem Wellenteil (2, 21, 30) umfasst, dass das Sensorteil (3, 22, 40) auf das Wellenteil (2, 21, 30) aufgesteckt wird, wobei beim Aufstecken des Sensorteils (3, 22, 40) durch das Kunststoffelement (6, 23, 24, 31) des Wellenteils (2, 21, 30) ein axialer Anschlag für das Sensorteil (3, 22, 40) gebildet wird.

11. Verfahren nach einem der vorhergehenden Ansprüche, **dadurch gekennzeichnet, dass**
das stoffschlüssige Verbinden, insbesondere das Schweißen, der jeweiligen Kunststoffelemente (5, 6, 23, 24, 25, 31, 41) umlaufend oder punktuell in vorbestimmten Abständen in Umfangsrichtung durchgeführt wird.

12. Verfahren nach einem der vorhergehenden Ansprüche,
**dadurch gekennzeichnet, dass**
die Kunststoffelemente (5, 6, 23, 24, 25, 31, 41) mit ihren jeweiligen Stirnwänden (8, 9, 27, 28) in Anlage miteinander gebracht werden und das stoffschlüssige Verbinden in einem axialen Grenzbereich (11, 26) zwischen den Stirnwänden (8, 9, 27, 28) durchgeführt wird.

13. Verfahren nach einem der vorhergehenden Ansprüche, **dadurch gekennzeichnet, dass**
die Kunststoffelemente (5, 6, 23, 24, 25, 31, 41) derart relativ zueinander angeordnet werden, dass sie sich in einem Überlappungsbereich (15, 52) in radialer Richtung überlappen, und das stoffschlüssige Verbinden in dem Überlappungsbereich (15, 52) durchgeführt wird.

14. Verfahren nach einem der vorhergehenden Ansprüche, **dadurch gekennzeichnet, dass**
eines der Kunststoffelemente (5, 6, 23, 24, 25, 31, 41) zumindest bereichsweise transparent für einen Laserstrahl ausgebildet wird und der transparente Bereich (14) mit dem anderen Kunststoffelement (5, 6, 23, 24, 25, 31, 41) in Anlage gebracht wird, wobei das Laserschweißen durch den transparenten Bereich (14) hindurch vorgenommen wird.

15. Verfahren nach einem der vorhergehenden Ansprüche, **dadurch gekennzeichnet, dass**
in einem ersten der Kunststoffelemente (5, 6, 23, 24, 25, 31, 41) zumindest eine Aussparung (46, 47), insbesondere eine radiale und/oder eine axiale Durchgangsöffnung, ausgebildet wird und dieses erste Kunststoffelement (5, 6, 23, 24, 25, 31, 41) im Bereich der Aussparung (46, 47) mit dem zweiten Kunststoffelement (5, 6, 23, 24, 25, 31, 41) in Anlage gebracht wird, wobei das stoffschlüssige Verbinden in einem die Aussparung (46, 47) begrenzenden Kantenbereich des ersten Kunststoffelements (5, 6, 23, 24, 25, 31, 41) durchgeführt wird.

16. Verfahren nach einem der vorhergehenden Ansprüche, **dadurch gekennzeichnet, dass**
vor dem stoffschlüssigen Verbinden das Sensorteil (3, 22, 40) und das Wellenteil (2, 21, 30) durch Pressfügen miteinander verbunden werden.

17. Anordnung (1, 20, 50) mit einem Wellenteil (2, 21, 30) eines Kraftfahrzeugs, insbesondere einer Lenkwelle, und mit einem mit dem Wellenteil (2, 21, 30) verbundenen Sensorteil (3, 22, 40) einer Sensoranordnung, welche zum Erfassen einer einen Rotationszustand des Wellenteils (2, 21, 30) charakterisierenden Größe ausgebildet ist, wobei, das Wellenteil (2, 21, 30) und das Sensorteil (3, 22, 40) über jeweilige Kunststoffelemente (5, 6, 23, 24, 25, 31, 41) stoffschlüssig miteinander verbunden sind,
**dadurch gekennzeichnet, dass** das Kunststoffelement (6,23,24,31) des Wellenteils (2,21,30) zumindest bereichsweise in eine an einem Umfang des Wellenteils (2,21,30) ausgebildete Vertiefung (7,32) angeordnet wird.

## Claims

1. Method for connecting a sensor part (3, 22, 40) of a sensor arrangement with a shaft part (2, 21, 30) of a motor vehicle, in particular of a steering shaft, wherein the sensor arrangement is used to measure a variable that characterizes a rotation state of the shaft part (2, 21, 30), with the following steps:
- providing a plastic element (5, 25, 41) on the shaft part (2, 21, 30),
- providing a plastic element (6, 23, 24, 31) on the sensor part (3, 22, 40) and
- establishing a material-bonded connection between the two plastic elements (5, 6, 23, 24, 25, 31, 41) so that the sensor part (3, 22, 40) and the shaft part (2, 21, 30) are connected to one another,
**characterized in that**
the plastic element (6, 23, 24, 31) of the shaft part (2, 21, 30) is arranged, at least partially, in a depression (7, 32) formed on a periphery of the shaft part (2, 21, 30).

2. Method according to Claim 1,
**characterized in that**
the plastic elements (5, 6, 23, 24, 25, 31, 41) are weldable elements and the material-bonded connection is established by welding, in particular laser welding and/or ultrasound welding.

3. Method according to Claim 1 or 2,
**characterized in that**
the material-bonded connection is established by hot caulking.

4. Method according to one of the preceding claims, **characterized in that**
as the sensor part (3, 22, 40) a permanent magnet, in particular a ring magnet or a segmented ring magnet or a magnet formed in the shape of a ring segment, is connected to a stated shaft part (2, 21, 30).

5. Method according to one of the preceding claims, **characterized in that**
as the sensor part (3, 22, 40) a magnet sensor for detecting a magnetic field is connected to a stated shaft part (2, 21, 30).

6. Method according to one of the preceding claims, **characterized in that**
at least one of the plastic elements (5, 6, 23, 24, 25, 31, 41) is annular.

7. Method according to one of the preceding claims, **characterized in that**
the plastic element (6, 23, 24, 31) is affixed to the shaft part (2, 21, 30) by injection moulding.

8. Method according to one of Claims 1 to 6,
**characterized in that**
the shaft part (2, 21, 30) and the associated plastic element (6, 23, 24, 31) are connected to one another by press fitting.

9. Method according to one of the preceding claims, **characterized in that**
the shaft part (2, 21, 30) and the associated plastic element (6, 23, 24, 31) are connected to one another in a positive-locking manner.

10. Method according to one of the preceding claims, **characterized in that**
connecting the sensor part (3, 22, 40) to the shaft part (2, 21, 30) involves fitting the sensor part (3, 22, 40) onto the shaft part (2, 21, 30), wherein, when the sensor part (3, 22, 40) is fitted on, the plastic element (6, 23, 24, 31) of the shaft part (2, 21, 30) forms an axial stop for the sensor part (3, 22, 40).

11. Method according to one of the preceding claims, **characterized in that**
the material-bonded connection, in particular welding, of the respective plastic elements (5, 6, 23, 24, 25, 31, 41) is carried out circumferentially or discretely at predetermined intervals in the circumferential direction.

12. Method according to one of the preceding claims, **characterized in that**
the plastic elements (5, 6, 23, 24, 25, 31, 41), with their respective end faces (8, 9, 27, 28), are brought into abutment with one another and the material-bonded connection is established in an axial boundary region (11, 26) between the end faces (8, 9, 27, 28).

13. Method according to one of the preceding claims, **characterized in that**
the plastic elements (5, 6, 23, 24, 25, 31, 41) are arranged relative to one another such that they overlap in the radial direction in an overlap region (15, 52), and the material-bonded connection is established in the overlap region (15, 52).

14. Method according to one of the preceding claims, **characterized in that**
one of the plastic elements (5, 6, 23, 24, 25, 31, 41) is, at least in certain regions, transparent for a laser beam and the transparent region (14) is brought to bear against the other plastic element (5, 6, 23, 24, 25, 31, 41), the laser welding being carried out through the transparent region (14).

15. Method according to one of the preceding claims, **characterized in that**
at least one cutout (46, 47), in particular a radial and/or axial through-opening, is created in a first one of the plastic elements (5, 6, 23, 24, 25, 31, 41), and this first plastic element (5, 6, 23, 24, 25, 31, 41) is brought to bear against the second plastic element (5, 6, 23, 24, 25, 31, 41) in the region of the cutout (46, 47), the material-bonded connection being established in an edge region, adjoining the cutout (46, 47), of the first plastic element (5, 6, 23, 24, 25, 31, 41).

16. Method according to one of the preceding claims, **characterized in that**
the sensor part (3, 22, 40) and the shaft part (2, 21, 30) are joined to one another by press fitting prior to the material-bonded connection.

17. Arrangement (1, 20, 50) with a shaft part (2, 21, 30) of a motor vehicle, in particular of a steering shaft, and with a sensor part (3, 22, 40), connected to the shaft part (2, 21, 30), of a sensor arrangement, which is designed to detect a variable that characterizes a rotation state of the shaft part (2, 21, 30),
wherein the shaft part (2, 21, 30) and the sensor part (3, 22, 40) are connected to one another in a material-bonded manner via respective plastic elements (5, 6, 23, 24, 25, 31, 41),
**characterized in that** the plastic element (6, 23, 24, 31) of the shaft part (2, 21, 30) is arranged, at least partially, in a depression (7, 32) formed on a periphery of the shaft part (2, 21, 30).

## Revendications

1. Procédé de connexion d'une partie de capteur (3, 22, 40) d'un agencement de capteur à une partie d'arbre (2, 21, 30) d'un véhicule automobile, en particulier d'un arbre de direction, une grandeur caractérisant un état de rotation de la partie d'arbre (2, 21, 30) étant mesurée au moyen de l'agencement de capteur, comprenant les étapes suivantes :
- fourniture d'un élément en plastique (5, 25, 41) sur la partie d'arbre (2, 21, 30),
- fourniture d'un élément en plastique (6, 23, 24, 31) au niveau de la partie de capteur (3, 22, 40) et
- connexion par liaison de matière des deux éléments en plastique (5, 6, 23, 24, 25, 31, 41) de telle sorte que la partie de capteur (3, 22, 40) et la partie d'arbre (2, 21, 30) soient connectées l'une à l'autre,
**caractérisé en ce que**
l'élément en plastique (6, 23, 24, 31) de la partie d'arbre (2, 21, 30) est disposé au moins en partie dans un renfoncement (7, 32) réalisé au niveau d'une périphérie de la partie d'arbre (2, 21, 30).

2. Procédé selon la revendication 1,
**caractérisé en ce que**
les éléments en plastique (5, 6, 23, 24, 25, 31, 41) sont des éléments pouvant être soudés et les connexions par liaison de matière s'effectuent par soudage, en particulier par soudage au laser et/ou par soudage à ultrasons.

3. Procédé selon la revendication 1 ou 2, **caractérisé en ce que** la connexion par liaison de matière s'effectue par matage à chaud.

4. Procédé selon l'une quelconque des revendications précédentes,
**caractérisé en ce**
**qu'**en tant que partie de capteur (3, 22, 40), un aimant permanent, en particulier un aimant annulaire ou un aimant annulaire segmenté ou un aimant réalisé sous la forme d'un segment annulaire, est connecté à une dite partie d'arbre (2, 21, 30).

5. Procédé selon l'une quelconque des revendications précédentes,
**caractérisé en ce**
**qu'**en tant que partie de capteur (3, 22, 40) un capteur magnétique pour détecter un champ magnétique est connecté à une dite partie d'arbre (2, 21, 30).

6. Procédé selon l'une quelconque des revendications précédentes,
**caractérisé en ce**
**qu'**au moins l'un des éléments en plastique (5, 6, 23, 24, 25, 31, 41) est réalisé sous forme annulaire.

7. Procédé selon l'une quelconque des revendications précédentes,
**caractérisé en ce que**
le montage de l'élément en plastique (6, 23, 24, 31) sur la partie d'arbre (2, 21, 30) s'effectue par moulage par injection.

8. Procédé selon l'une quelconque des revendications 1 à 6,
**caractérisé en ce que**
la partie d'arbre (2, 21, 30) et l'élément en plastique associé (6, 23, 24, 31) sont connectés l'un à l'autre par assemblage par pressage.

9. Procédé selon l'une quelconque des revendications précédentes,
**caractérisé en ce que**
la partie d'arbre (2, 21, 30) et l'élément en plastique associé (6, 23, 24, 31) sont connectés l'un à l'autre par engagement par coopération de formes.

10. Procédé selon l'une quelconque des revendications précédentes,
caractérisé ce que
la connexion de la partie de capteur (3, 22, 40) à la partie d'arbre (2, 21, 30) comprend le fait que la partie de capteur (3, 22, 40) est enfichée sur la partie d'arbre (2, 21, 30), une butée axiale pour la partie de capteur (3, 22, 40) étant formée lors de l'enfichage la partie de capteur (3, 22, 40) par l'élément en plastique (6, 23, 24, 31) de la partie d'arbre (2, 21, 30).

11. Procédé selon l'une quelconque des revendications précédentes,
**caractérisé en ce que**
la connexion par liaison de matière, en particulier le soudage, des éléments en plastique respectifs (5, 6, 23, 24, 25, 31, 41) s'effectue sur la périphérie ou ponctuellement à intervalles prédéterminés dans la direction périphérique.

12. Procédé selon l'une quelconque des revendications précédentes,
**caractérisé en ce que**
les éléments en plastique (5, 6, 23, 24, 25, 31, 41) sont amenés en appui les uns contre les autres avec leurs parois frontales respectives (8, 9, 27, 28) et la connexion par liaison de matière est effectuée dans une région limite axiale (11, 26) entre les parois frontales (8, 9, 27, 28).

13. Procédé selon l'une quelconque des revendications précédentes,
**caractérisé en ce que**
les éléments en plastique (5, 6, 23, 24, 25, 31, 41) sont disposés les uns par rapport aux autres de telle sorte qu'ils se chevauchent dans une région de chevauchement (15, 52) dans la direction radiale, et la connexion par liaison de matière est effectuée dans la région de chevauchement (15, 52) .

14. Procédé selon l'une quelconque des revendications précédentes,
**caractérisé en ce que**
l'un des éléments en plastique (5, 6, 23, 24, 25, 31, 41) est réalisé de manière au moins en partie transparente pour un faisceau laser, et la région transparente (14) est amenée en appui avec l'autre élément en plastique (5, 6, 23, 24, 25, 31, 41), le soudage au laser étant effectué à travers la région transparente (14).

15. Procédé selon l'une quelconque des revendications précédentes,
**caractérisé en ce que**
dans un premier des éléments en plastique (5, 6, 23, 24, 25, 31, 41), est réalisé au moins un évidement (46, 47), en particulier une ouverture radiale et/ou axiale et ce premier élément en plastique (5, 6, 23, 24, 25, 31, 41) est amené en appui dans la région de l'évidement (46, 47) avec le deuxième élément en plastique (5, 6, 23, 24, 25, 31, 41), la connexion par liaison de matière étant effectuée dans une région d'arête du premier élément en plastique (5, 6, 23, 24, 25, 31, 41) limitant l'évidement (46, 47).

16. Procédé selon l'une quelconque des revendications précédentes,
**caractérisé en ce**
**qu'**avant la connexion par liaison de matière, la partie de capteur (3, 22, 40) et la partie d'arbre (2, 21, 30) sont connectées l'une à l'autre par assemblage par pressage.

17. Agencement (1, 20, 50) comprenant une partie d'arbre (2, 21, 30) d'un véhicule automobile, en particulier d'un arbre de direction, et une partie de capteur (3, 22, 40) d'un agencement de capteur, connectée à la partie d'arbre (2, 21, 30), lequel agencement de capteur est réalisé pour détecter une grandeur caractérisant un état de rotation de la partie d'arbre (2, 21, 30), la partie d'arbre (2, 21, 30) et la partie de capteur (3, 22, 40) étant connectées par liaison de matière l'une à l'autre par le biais d'éléments en plastique respectifs (5, 6, 23, 24, 25, 31, 41),
**caractérisé en ce que** l'élément en plastique (6, 23, 24, 31) de la partie d'arbre (2, 21, 30) est disposé au moins en partie dans un renfoncement (7, 32) réalisé au niveau d'une périphérie de la partie d'arbre (2, 21, 30).
